# EUROPEAN PATENT SPECIFICATION

(11) **EP 3 408 785 B1**
(45) Date of publication and mention of the grant of the patent: **27.11.2024**
(21) Application number: 17708348.2
(22) Date of filing: 27.01.2017
(51) Int. Cl.: G06F 21/62, G06F 21/71

(54) **SECURING INTERNAL SERVICES IN AN APPLIANCE**
SICHERUNG INTERNER DIENSTE IN EINEM GERÄT
SÉCURISATION DE SERVICES INTERNES DANS UN APPAREIL

(30) Priority: 29.01.2016 US 201615010444
(43) Date of publication of application: 05.12.2018
(73) Proprietor: Veritas Technologies LLC, Mountain View, California 94043 (US)
(72) Inventor: GOEL, Vikas, Sunnyvale, CA 94085-3145 (US)
(74) Representative: D Young & Co LLP
(86) International application number: PCT/US2017/015231
(87) International publication number: WO 2017/132440

(56) References cited:
- US-A1- 2004 199 763
- US-A1- 2007 016 914
- US-A1- 2008 126 762
- US-A1- 2009 007 242

## Description

### FIELD OF THE DISCLOSURE

The present disclosure relates to data protection systems and, more particularly, to systems, methods, and processes to secure internal services in an appliance.

### DESCRIPTION OF THE RELATED ART

Businesses use appliances to provide business services to customers. An appliance can be a hardware device with integrated software (e.g., firmware), designed to provide one or more business services. An appliance can also be a virtual appliance. A virtual appliance is a pre-configured virtual machine image and can be created by installing a software appliance on a virtual machine. Unlike general purpose computers, an appliance is not designed to allow users to change the software (including the underlying operating system).

Appliances can also be configured with hardware and/or software to enable them to function as clients and/or servers. An end user of these clients and/or servers need not understand the technical details of the underlying operating system running on the appliance because the hardware and/or software is preconfigured (e.g., by a manufacturer) and unmodifiable. In this manner, appliances are designed to be secure black boxes for the end user (e.g., a customer).

The business service(s) provided by an appliance often depend on one or more internal services provided by the appliance (e.g., a database server, and the like). These internal services are critical for the functioning of the appliance and thus, must be protected from malicious attacks and/or security vulnerabilities.
US 2008/126762 A1 discloses methods, systems, and apparatus for object invocation across protection domain boundaries.

### SUMMARY OF THE DISCLOSURE

Disclosed herein are methods, systems, and processes to secure internal services in an appliance. One such method involves intercepting a service call initiated by a client process of a client. The service call is a request for an internal service provided by a server. The client and the server are deployed in an appliance. The service call comprises an identifier and the identifier identifies the internal service. The method determines whether one or more rules are specified for the identifier. In response to the determination that one or more rules are specified, the method processes one or more attributes of the one or more rules specified. The method then forwards the service call to the server, if the processing indicates that the forwarding the service call is allowable.

In one embodiment, the method retrieves one or more client process properties from kernel memory. The kernel memory stores client process properties associated with a client process. In this example, the identifier is a port identifier or a port number. The client process properties include, but are not limited to, a user context, a user group context, a client program name, a parent process name, or a terminal type.

In some embodiments, the method forwards the service call to the server if each attribute one or more rules specified for the internal service matches a corresponding client process property retrieved from kernel memory. In other embodiments, the method forwards the service call to the server without accessing kernel memory, if at least one rule of the one or more rules is not specified (e.g., no rule is defined) for the internal service identified by the identifier.

In certain embodiments, the method generates a reject notification (e.g., with an error operation) if each attribute of the one or more rules specified does not match at least one client process property of the one or more client process properties retrieved from kernel memory. The method then sends the reject notification to the client.

In one embodiment, a first attribute of a first rule corresponds to a first client process property. In another embodiment, a second attribute of a second rule corresponds to a second client process property. Each rule specified has one or more unique attributes. Each unique attribute corresponds to a unique client process property retrieved from kernel memory.

In some embodiments, the rules are part of a rule set. In this example, the rule set is part of a service call filter module and the service call filter module is a component of the appliance kernel.

In other embodiments, the method accesses the rule set to determine whether the internal service identified by the identifier is unprotected or protected (e.g., whether the rule set specifies or defines at least one rule for the identifier specified in the service call). In this example, the internal service is protected if the rule set includes at least one rule for the identifier specified in the service call, and the internal service is unprotected if the rule set includes no rule for the internal service specified in the service call.

In certain embodiments, the method forwarding the service call to the server if the internal service is unprotected, or if each attribute of at least one rule matches the corresponding client process property of the one or more client process properties.

The foregoing is a summary and thus contains, by necessity, simplifications, generalizations and omissions of detail; consequently those skilled in the art will appreciate that the summary is illustrative only and is not intended to be in any limiting. Other aspects, features, and advantages of the present disclosure, as defined solely by the claims, will become apparent in the non-limiting detailed description set forth below.

### BRIEF DESCRIPTION OF THE DRAWINGS

The present disclosure may be better understood, and its numerous advantage, objects and features made apparent to those skilled in the art, by referencing the accompanying drawings.
FIG. 1A is a block diagram of an appliance that provides internal services, according to one embodiment of the present disclosure.
FIG. 1B is a block diagram of an appliance that implements a service call filter module, according to one embodiment of the present disclosure.
FIG. 1C is a block diagram of a rule set with rules and attributes, according to one embodiment of the present disclosure.
FIG. 1D is a block diagram of attributes and client process properties, according to one embodiment of the present disclosure.
FIG. 2A is a block diagram of an appliance that denies access to a protected internal service, according to one embodiment of the present disclosure.
FIG. 2B is a block diagram of an appliance that provides access to a protected internal service, according to one embodiment of the present disclosure.
FIG. 2C is a block diagram of an appliance that provides access to an unprotected internal service, according to one embodiment of the present disclosure.
FIG. 3 is a service call authentication table, according to one embodiment of the present disclosure.
FIG. 4 is a flowchart that illustrates a process for forwarding a service call to a server, according to one embodiment of the present disclosure.
FIG. 5 is a flowchart that illustrates a process for processing rule attributes using client process properties, according to one embodiment of the present disclosure.
FIG. 6 is a flowchart that illustrates a process for determining whether to permit access to an internal service, according to one embodiment of the present disclosure.
FIG. 7 is a flowchart that illustrates a process for securing internal services in an appliance, according to one embodiment of the present disclosure.
FIG. 8 is a block diagram of a computing system, illustrating how a kernel filter module can be implemented in software, according to one embodiment of the present disclosure.
FIG. 9 is a block diagram of a networked system, illustrating how various devices can communicate via a network, according to one embodiment of the present disclosure.

While the disclosure is susceptible to various modifications and alternative forms, specific embodiments of the disclosure are provided as examples in the drawings and detailed description. It should be understood that the drawings and detailed description are not intended to limit the disclosure to the particular form disclosed. Instead, the intention is to cover all modifications, equivalents and alternatives falling within the spirit and scope of the disclosure as defined by the appended claims.

### DETAILED DESCRIPTION

### Introduction

One type of computing appliance (appliance) is a discrete hardware device with integrated software (e.g., firmware), specifically designed to provide a specific computing resource (e.g., access to one or more business services). Another type of appliance is a virtual appliance. A virtual appliance can be configured to provide similar functionality as a dedicated hardware appliance, but the virtual appliance is distributed (e.g., to customers), as a software virtual machine image in a hypervisor, or for a hypervisor-enabled device. In addition, a customer can deploy an appliance by integrating the software (e.g., operating system (OS) software) and the hardware of a computing device.

An appliance has exactly one combination of hardware, operating system, and application software (e.g., application software that is required to provide business services). Therefore, an appliance can be deployed and managed by customers without extensive Information Technology (IT) knowledge. Once deployed however, an appliance does not permit (and is not designed to allow) customers to change (or modify) the software (e.g., OS software). Therefore, appliances are designed to be secure black boxes for customers.

Businesses use appliances to provide business services to customers. Software (e.g., application software and OS software in the appliance) that is configured provide these one or more business services (e.g., online banking, electronic commerce, and the like) requires one or more internal services for operation. For example, an appliance can be configured with a server that provides internal services such as database and/or web services required by the application software that provides online banking services.

Internal services are computing services (e.g., web services provided by a web server, database services provided by a database server, a message queue server and the like) that are only provided to the software (e.g., application software and/or OS software) or the hardware of an appliance. Therefore, internal services are generally not exposed to (or accessible by) users of the appliance or by other computing devices (e.g., external clients) outside the appliance.

Although internal services are not exposed to (nor accessible by) external clients, internal services are prone to security attacks from local and remote clients (e.g., local or remote client programs that execute on the appliance and/or users who have control of and/or access to the appliance). For example, a user with access to the appliance can use a local client program (or even develop a custom client program) to initiate a connection request (or a service call) from that client program to: (1) initiate a brute force attack (e.g., to gain sensitive information accessible to an internal service), (2) exploit security vulnerabilities of the internal service (e.g., by gaining root privilege using a reverse shell command), (3) initiate a Denial of Service (DoS) attack, and/or (4) initiate one or more of various other malicious attacks.

A firewall may be useful to secure internal services from external clients, but a firewall cannot prevent local client programs and/or users from accessing and attacking the internal services that are running on the appliance. Further, Intrusion Detection Systems (IDS) and Intrusion Prevention Systems (IPS) do not secure internal services from local clients. Further still, because the software executing on an appliance cannot be modified by the customer and/or user, modifying the internal service to secure the internal service from local clients is also not a feasible solution.

Disclosed herein are methods, systems, and processes to secure internal services in an appliance (e.g., in a single appliance deployment), by only permitting connection/service requests (e.g, connect calls, service calls, and the like) for internal services from certain clients (e.g., local client programs and/or client processes such as web services, internal scripts, maintenance and support users, and the like, that are required for the functioning of the appliance or appliance ecosystem) without modifying the internal services themselves.

It should be noted that the present application is related to the subject matter of application entitled "Securing Internal Services In A Distributed Environment," filed on the same day as the present application and having the same inventor and assignee, which is incorporated herein by reference, in its entirety and for all purposes.

### Examples of a Service Call Filter Module Implemented in Appliance Kernel

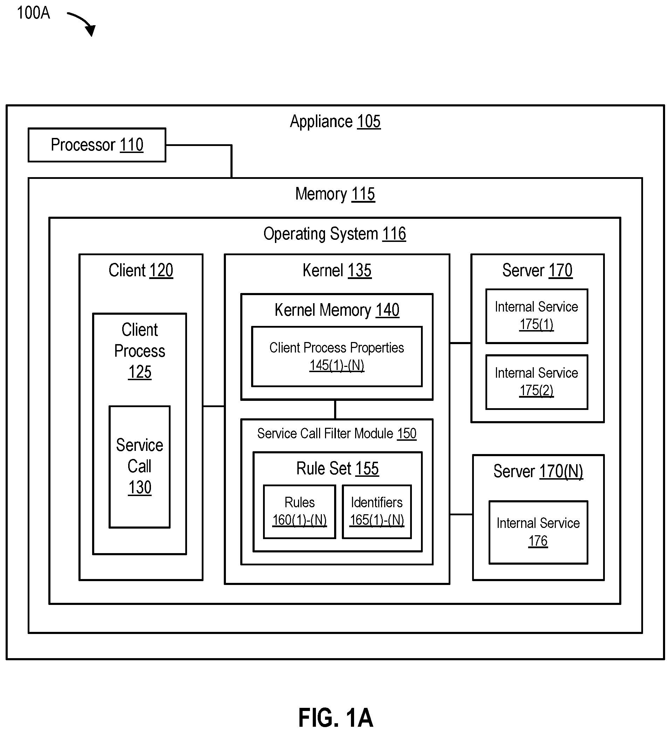

FIG. 1A is a block diagram of an appliance, according to one embodiment. Appliance 105 is a computing device and includes a processor 110, a memory 115, and an operating system (OS) 116. Appliance 105 is configured to secure one or more internal services executing on appliance 105. Appliance 105 can be any of a variety of different computing devices, including a server, personal computing device, laptop computer, cellular phone, or the like. Appliance 105 can also execute (or host) any of a variety of different software programs (e.g., a client program, a server program, and the like) on one or more virtual machines.

As shown in FIG. 1A, appliance 105 implements a client program (e.g., client 120) and a server program (e.g., server 170). Client 120 executes a client process 125. Client process 125 initiates service call 130 to server 170. Client 120 and server 170 communicate with each other by exchanging messages through a common socket application programming interface (API). Service call 130 is one example of a type of message that can sent from client 120 to server 170. For example, client 120 can execute client process 125 to request one or more internal services from server 170 by sending (or transmitting) service call 130 to server 170. In this example, service call 130 is a connection (or service) request from client 120 to server 170 requesting one or more internal services from server 170.

Server 170 provides internal services 175(1)-(N). Internal services 175(1)-(N) are computing services (e.g., web services, database services, message queues and the like) that are only provided to clients that are required for the appliance ecosystem (e.g., appliance 105) to function. Appliance 105 can be configured to implement more than one server. Each such server can be implemented and configured to provide more than one internal service (e.g., internal services 175(1) and 175(2). In addition, different servers can be implemented and configured to provide different internal services (e.g., internal service 176). It should be noted that the terms "internal service" and "server" can be used interchangeably in some embodiments. For example, the process instance of a database server can be referred to as a database service (e.g., an internal service), and the process instance of a message queue server can be referred to as a message queue service (e.g., another internal service).

Appliance 105 also includes kernel 135. Kernel 135 is part of OS 116 that executes on appliance 105. Kernel 135 manages input/output (I/O) requests from software (e.g., a data request, a data reply, and the like from client 120 and/or server 170) and translates the I/O requests into data processing instructions (e.g., for a central processing unit (CPU) or other computing components of appliance 105). Kernel 135 includes kernel memory 140 and a service call filter module 150. Kernel memory 140 stores client process properties 145(1)-(N). Service call filter module 150 sits in kernel 135 and includes a rule set 155. Rule set 155 includes rules 160(1)-(N) and identifiers 165(1)-(N). In some embodiments, identifiers are service identifiers and include a port identifier and/or port number associated with an internal service. In addition to a port number, an identifier can also include a system address of a server that provides the required internal service (e.g., server properties).

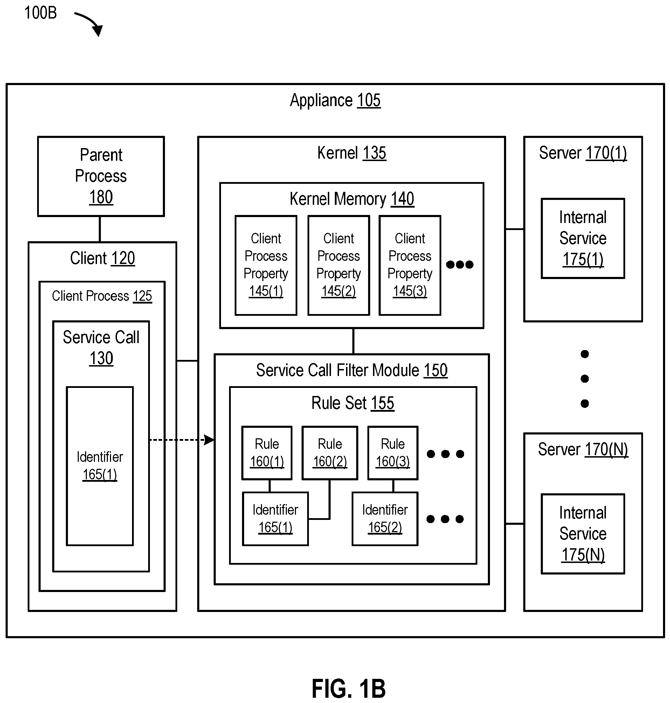

FIG. 1B is a block diagram of an appliance that implements a service call filter module, according to one embodiment. Client 120 can be associated with a parent process. For example, parent process 180 can execute client process 125 on client 120 to initiate service call 130. Client process 125 can then request server 170 to provide one or more internal. As shown in FIG. 1B, kernel 135 includes kernel memory 140. Kernel memory 140 stores client process properties 145(1)-(N). Client process properties 145(1)-(N) are properties associated with client process 125 (and/or client 120). In one embodiment, client process properties 145(1)-(N) include but are not limited to: (1) client program name (e.g., a client program name that executes client process 125), (2) parent process name (e.g., a parent process that executes client process 125), (3) user or user group context associated with client process 125, (4) terminal type of the client process (e.g., terminal type from where the client program is executed), and (5) one or more of various other client process properties.

Service call filter module 150 is also part of kernel 135. Service call filter module 150 includes rule set 155. Rule set 155 includes one or more rules (e.g., rules 160(1), 160(2) and 160(3)). Each internal service provided by the one or more servers executing on appliance 105 corresponds to (and is identified by) a single (and unique) identifier (e.g., internal service 175(1) corresponds to identifier 165(1)). An identifier includes a port number of the internal service/server, and can include a system address of the server providing the internal service.

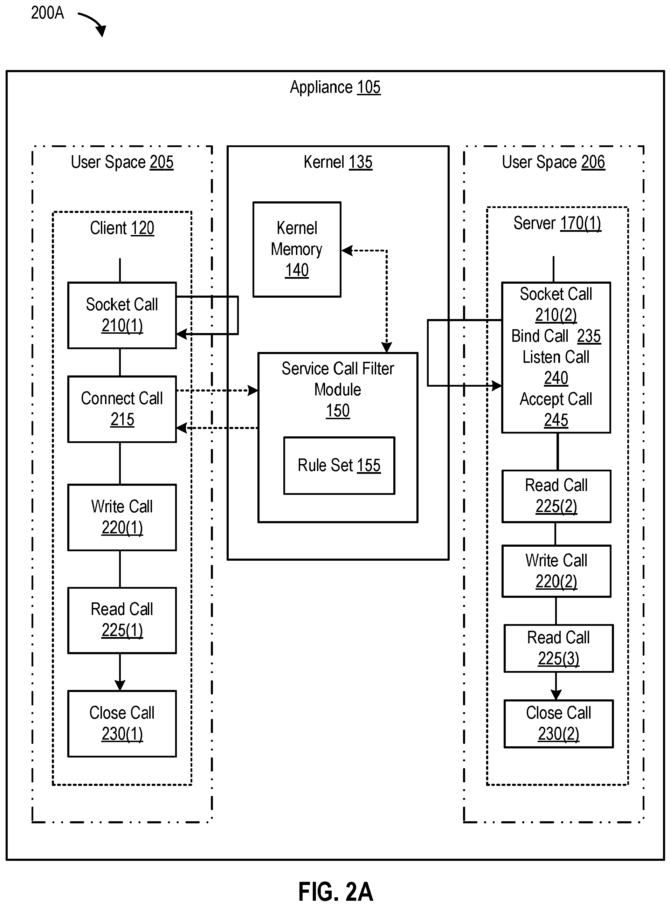

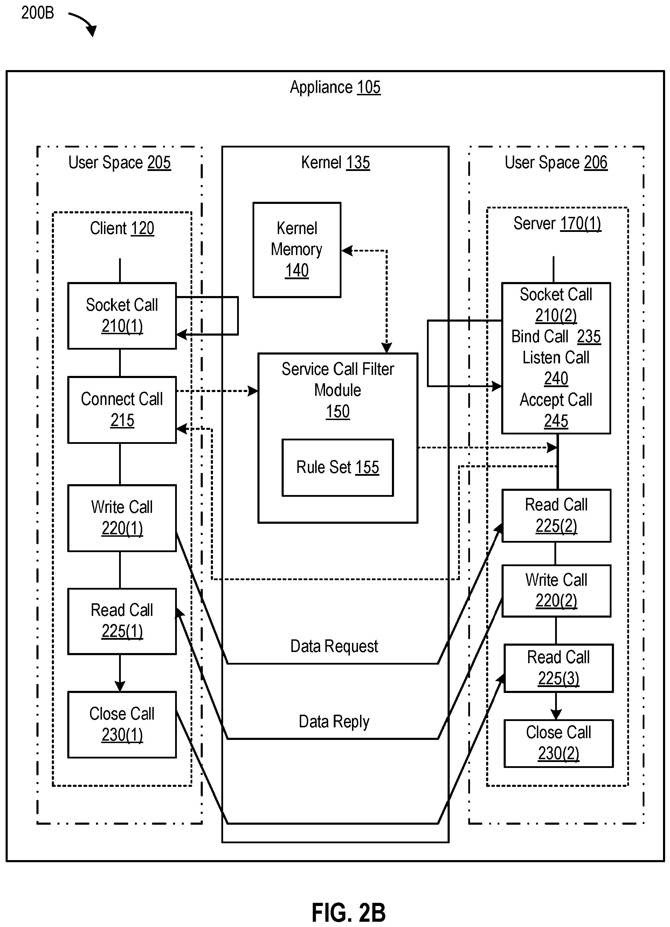

Rule set 155 includes one or more rules that are specified and/or defined for a given internal service identified by a given identifier. As shown in FIG. 2B, a multiple rules can be specified and/or defined for a given identifier (e.g., each identifier can correspond to one or more rules). For example, rules 160(1) and 160(2) are specified and/or defined in rule set 155 for identifier 165(1). Each rule includes one or more (unique) attributes that must be met, fulfilled, and/or matched by the client process properties of client process 125 before client 120 is provided access to an internal service that corresponds to the given identifier. In an appliance environment, a vendor can specify and/or define rule set 155. In a non-appliance environment, a system administrator can specify and/or define rule set 155.

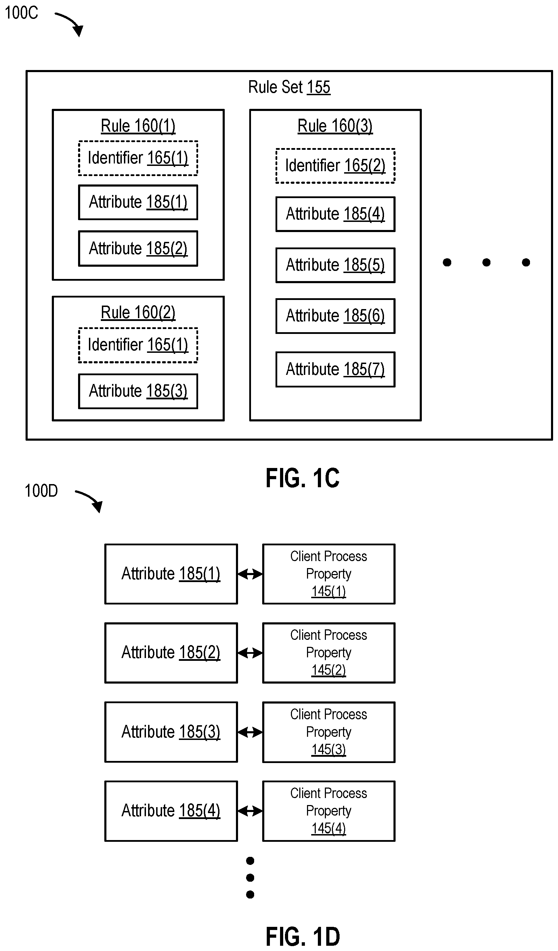

FIG. 1C is a block diagram of a rule set with rules and attributes, according to one embodiment. Rule set 155 can include multiple rules (e.g., rules 160(1), 160(2), and 160(3)). Each rule can specify and include one or more attributes. FIG. 1D is a block diagram of attributes and client process properties, according to one embodiment. As shown in FIG. 1D, each attribute specified in a rule is associated with an/or corresponds to a unique client process property. Therefore, access to internal service 175(1) requires client process 125 to meet, fulfill, and/or match each attribute specified in rules 160(1) and 160(2) if identifier 165(1) identifies internal service 175(1) (e.g., using a port number associated with internal service 175(1) and/or a system address of server 170(1)).

As noted, identifiers can be port identifiers (e.g., each internal service has a unique port number). A port is an endpoint of communication in an OS. In appliance 105, a port identifier identifies a specific internal service. Once identified, a port identifier (e.g., an Internet socket port number) can be used to establish host-to-host connectivity (e.g., between client 120 and server 170). In other examples, an identifier can be any type of identifier (e.g., other than a port number, a port identifier, a service identifier, a system address, or any combination thereof) as long as the identifier uniquely identifies an internal service. However, it should also be noted that in one embodiment, the identifier specifies (or includes) a port number of the internal service, and optionally, a system address of the server that is providing the internal service. Therefore, the identifier can be used by service call filter module 150 to determine whether one or more rules have been specified/defined for the internal service identified by the identifier.

### Examples of Intercepting and Processing a Service Call

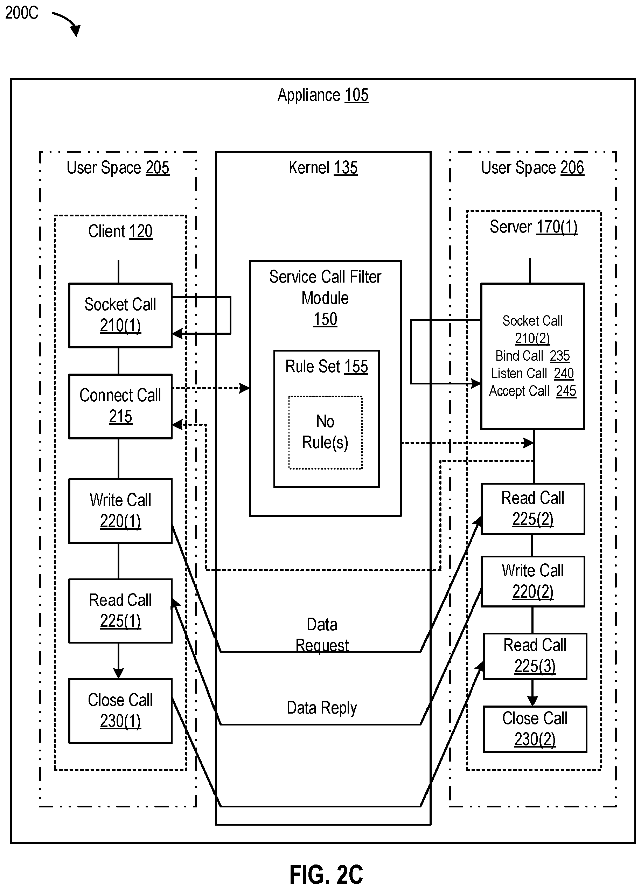

FIGs. 2A, 2B, and 2C are block diagrams of a service filter module that intercepts a service call, according to one or more embodiments. In this example, service call filter module 150 intercepts service call 130 initiated by a client process. The client process (e.g., client process 125) can be initiated by a user or by another process (e.g., parent process 180) running in appliance 105 by executing a client program. Service call 130 is a request for an internal service (e.g., internal service 175(1)) provided by server 170). Service call 130 includes identifier 165(1) that identifies internal service 175(1).

In one embodiment, service call filter module 150 accesses rule set 155 to determine whether the internal service identified by the identifier is unprotected or protected (in the context of service call filter module 150). In this example, the internal service is protected if rule set 155 specifies and/or defines at least one rule for the identifier specified in the service call. The internal service is unprotected if the rule set does not specifies and/or defines no rule for the identifier specified in the service call.

Therefore, by intercepting a service call (e.g., connect call 215) that specifies an identifier, service call filter module 150 identifies an internal service identified by the identifier as well as one or more rules specified and/or defined for the internal service in rule set 155. Further, by identifying the internal service (e.g., internal service 175(1)) that is associated with the identifier (e.g., identifier 165(1)), service call filter module 150 determines that rules 160(1) and 160(2) are applicable to internal service 175(1). Service call filter module 150 then processes each attribute of the one or more rules to determine whether each attribute of each rule specified for a given identifier meets, fulfills, or matches the corresponding client process property associated with the client process that is retrieved from kernel memory.

In one embodiment, if no rule(s) are specified and/or defined in rule set 155 for the internal service identified by the identifier, service call filter module 150 forwards the service call to the server without accessing kernel memory to retrieve the client process properties because the lack of rule(s) indicates that the internal service is an unprotected internal service.

However, in another embodiment, if a rule (e.g., rule 160(1)) is specified and/or defined in rule set 155 for an internal service identified by the identifier, service call filter module 150 processes each attribute of one or more rules specified using client process properties retrieved from kernel memory. If the processing indicates that the forwarding the service call is allowable (e.g., if each attribute in at least one rule specified for an internal service matches the corresponding client process property associated with the client process that initiates the service call), service filter module 150 forwards the service call to the server.

Kernel memory 140 stores multiple client process properties associated with the client process. For example, kernel memory 140 stores at least the following client process properties associated with the client process - a client program name, a parent process, a user context, a user group context, and/or a terminal type. Kernel memory 140 can also store various other possible client process properties in addition to the foregoing.

Therefore, if rules 160(1) and 160(2) are specified and/or defined for internal service 175(1) identified by identifier 165(1), service call filter module 150 access kernel memory 140 to determine whether client process 125 is associated with and/or corresponds to three unique client process properties (e.g., client process properties 145(1), 145(2), and 145(3)) that match attributes 185(1), 185(2), and 185(3), respectively.

Service call filter module 150 processes attributes of rule(s) using client process properties by retrieving client process properties from kernel memory 140. Because service call filter module 150 is a kernel component, service call filter module 150 has access to the contents of kernel memory 140. Service call filter module 150 forwards the service call (e.g., connect call 215) to the server if each attribute specified in one or more rules defined for a given internal service provided by the server matches at least one unique client process property retrieved from kernel memory 140. Service call filter module 150 generates a reject notification if each attribute specified in a defined rule does not match at least one client process property retrieved from kernel memory 140. Service call filter module 150 forwards the service call to the server without accessing kernel memory 140 (or performing attribute processing) if there is no rule that is specified and/or defined for the internal service identified by the identifier.

### Examples of Processing Attribute(s) of Rule(s) Using Client Process Properties

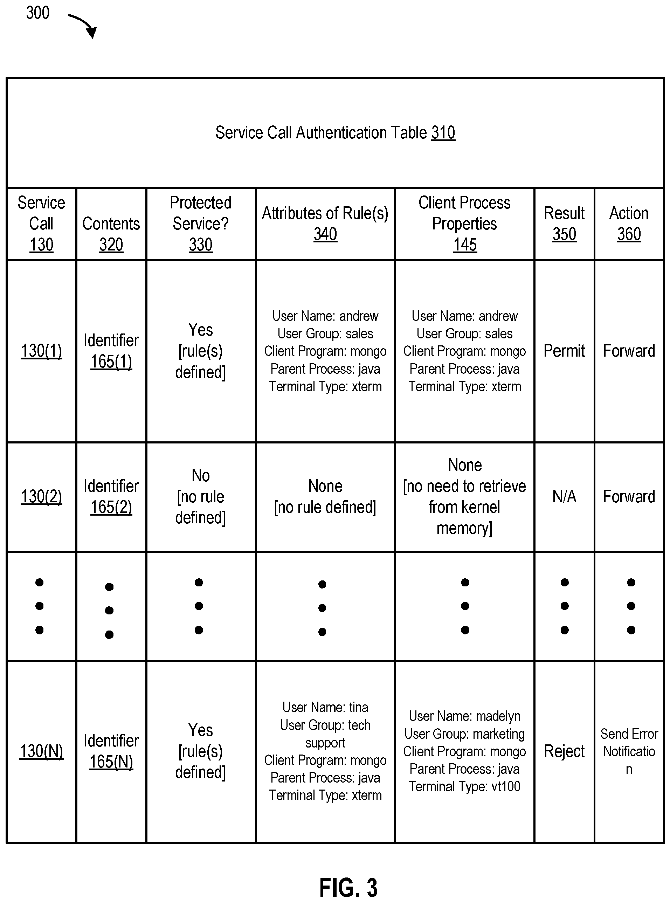

FIG. 3 is a service call authentication table, according to one or more embodiments. In one embodiment, service call 130(1) can specify identifier 165(1) (to identify and request access to a specific internal service). Service call filter module 150 intercepts service call 130(1) from client 120 to server 170(1). Service call filter module 150 then identifies the internal service that identified by identifier 165(1) and determines whether rule set 155 specifies one or more rule(s) for the internal service. Because the internal service identified by service call 130(1) is a protected internal service (e.g., one or more rules have been specified), service call filter module 150 accesses the one or more rules that are specified for the internal service to determine the attributes of each specified rule. In this case, the attributes of one such rule specified for the internal service identified by identifier 165(1) in service call 130(1) include a user context of "andrew," a user group context of "sales," a client program name of "Mongo," a parent process of "java," and a terminal type of "xterm."

Service call filter module 150 then accesses kernel memory 140 and retrieves the following client process properties of the client process - the user group name, the client program name, the parent process name, and the terminal type. Service call filter module 150 then processes the attributes with the retrieved client process properties. If each attribute of the specified rule(s) matches at least one client process property retrieved from kernel memory 140, service call filter module 150 permits (or allows) service call 130(1), and forwards service call 130(1) to server 170(1).

In another embodiment, service call 130(2) can specify identifier 165(2) (to identify and request access to a specific internal service). Service call filter module 150 intercepts service call 130(2) from client 120 to server 170(2). Service call filter module 150 then identifies the internal service that corresponds to identifier 165(2) and determines whether one or more rules are specified for the internal service in rule set 155. If at least one rule is not specified and/or defined for the internal service identified by identifier 165(2), service call filter module 150 simply forwards service call 130(2) to server 170(2) without performing any additional processing (e.g., processing attributes and/or accessing kernel memory).

In certain embodiments, service call 130(N) can specify identifier 165(N) (to identify and request access to a specific internal service). Service call filter module 150 intercepts service call 130(N) from client 120 to server 170(N). Service call filter module 150 then identifies the internal service that corresponds to identifier 165(N) and determines whether one or more rules are specified for the internal service in rule set 155.

Kernel filter module 150 accesses rule set 155 and determines that the internal service is associated with one or more rules whose attributes require a client process to have a user context of "tina" a user group context of "marketing," a client program name of "mongo," a parent process of "java," and a terminal type of "vt100." Service call filter module 150 accesses kernel memory 140 and retrieves the following client process properties of the client process - user name, user group, client program name, parent process, and the terminal type.

Service call filter module 150 then processes each attribute of each specified rule using the retrieved client process properties. Because each attribute specified in the rule(s) does not match at least one client process property retrieved from kernel memory 140 (e.g., user context "madelyn" does not match "tina", user group context "marketing" does not match "tech support," and terminal type "vt100" does not match "java"), service call filter module 150 sends a reject (or error) notification to client 120 and does not permit access to the internal service identified by identifier 165(N) in service call 130(N).

### Example Processes to Secure Internal Services in an Appliance

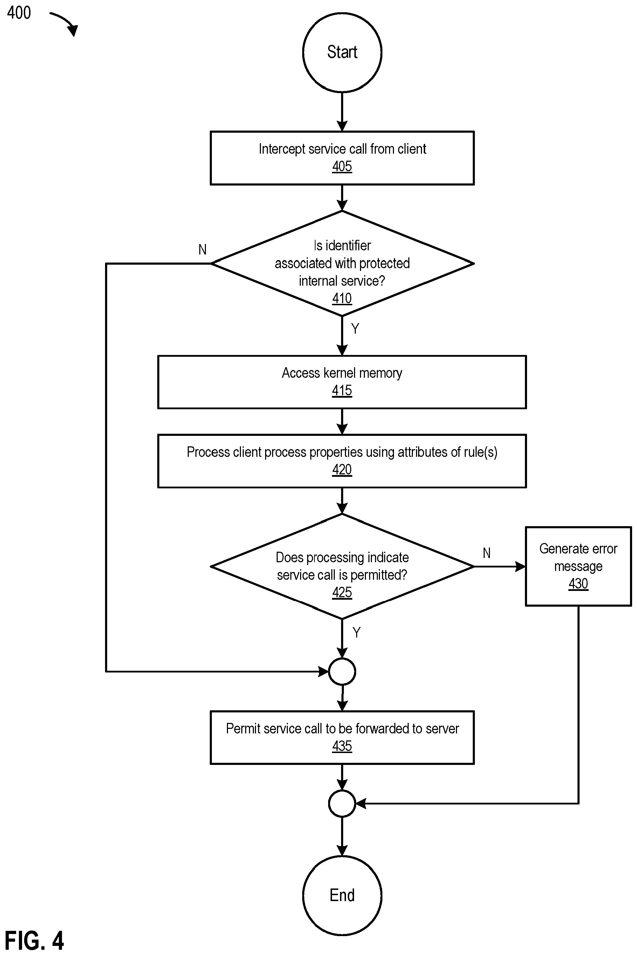

FIG. 4 is a flowchart that illustrates a process for forwarding a service call to a server, according to one embodiment. The process begins at 405 by intercepting a service call from a client (e.g., service call 130 initiated by client process 125). At 410, the process determines whether the identifier specified in the service call is associated with a protected internal service (e.g., whether one or more rule(s) are specified and/or defined for the identified internal service). If no rules are specified and/or defined for the internal service identified by the identifier, the process, at 435 permits the service call to be forwarded to the server without performing any additional processing.

However, if at least one rule is specified and/or defined for the internal service in rule set 155, the process, at 415, accesses kernel memory (of the appliance) and at 420, processes attribute(s) of the specified rule(s) using client process properties retrieved from kernel memory (e.g., determines whether each attribute of at least one rule that is specified for the internal service matches a client process property retrieved from the kernel memory). At 430, the process determines whether the processing indicates that the service call is permitted.

If each attribute of each rule that is specified for the internal service does not match a client process property, the process, at 430, generates an error message (and sends the error message to the client initiating the service call). However, if each attribute of at least one rule that is specified for the internal service matches at least one client process property, the process ends at 435 by forwarding the service call to the server.

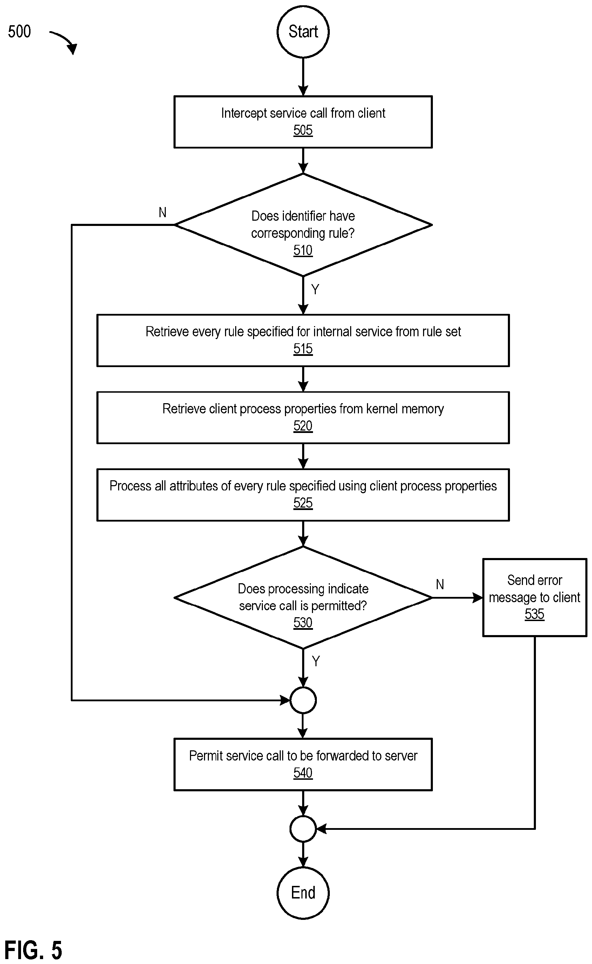

FIG. 5 is a flowchart that illustrates a process for processing rule attributes using client process properties, according to one embodiment. The process begins at 505 by intercepting a service call from a client. At 510, the process determines whether the identifier (specified in the service call) is associated with an internal service that has a specified rule (or rules). If the internal service does not have a specified rule, the process, at 540, permits the service call to be forwarded to the server. However, if at least one rule is specified and/or defined for the internal service, the process, at 515, retrieves each rule specified for the internal service from a rule set (e.g., the rule set is part of and loaded into service call filter module 150).

At 520, the process retrieves client process properties from the kernel memory (e.g., by accessing kernel memory 140). At 525, the process processes each attribute of every rule specified using the client process properties. At 530, the process determines whether the processing indicates that the service call is permitted. If each attribute of every rule that is specified for the internal service does not match at least one client process property, the process, at 535, generates an error message (and sends the error message to the client initiating the service call). However, if each (unique) attribute of at least one rule that is specified and/or defined for the internal service (e.g., in rule set 155) matches the corresponding client process property, the process ends at 540 by forwarding the service call to the server.

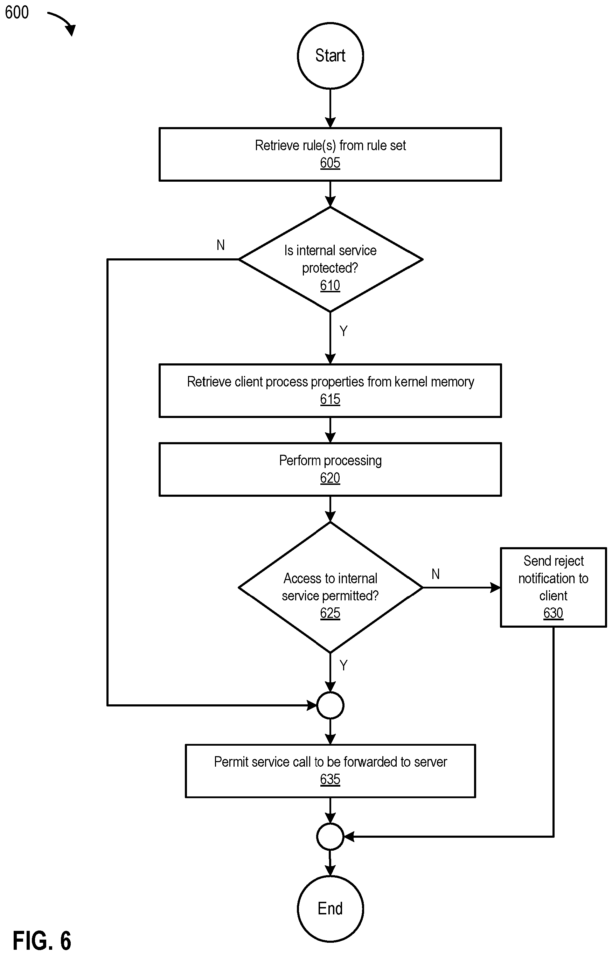

FIG. 6 is a flowchart that illustrates a process for determining whether to permit access to an internal service, according to one embodiment. The process begins at 605 by retrieving rule(s) from a rule set. At 610, the process determines whether the internal service (e.g., identified by an identifier specified in a service call) is protected. If at least one rule is not specified and/or defined for the internal service, the process determines that the internal service is unprotected and at 632, permits the service call to be forwarded to the server.

However, if at least one rule is specified and/or defined for the internal service in the rule set, the process determines that the internal service is protected, and at 615 retrieves client process properties from kernel memory. At 620, the process performs processing (e.g., to determine whether each attribute of at least one rule specified and/or defined for the internal service matches the corresponding client process property retrieved from the kernel memory). At 625, the process determines whether access to the internal service is permitted.

If each attribute of every rule that is specified and/or defined for the internal service does not match at least one client process property, the process, at 630, sends a reject notification to the client. However, if each attribute of every rule that is specified and/or defined the internal service matches the corresponding client process property retrieved from kernel memory, the process ends at 635 by forwarding the service call to the server.

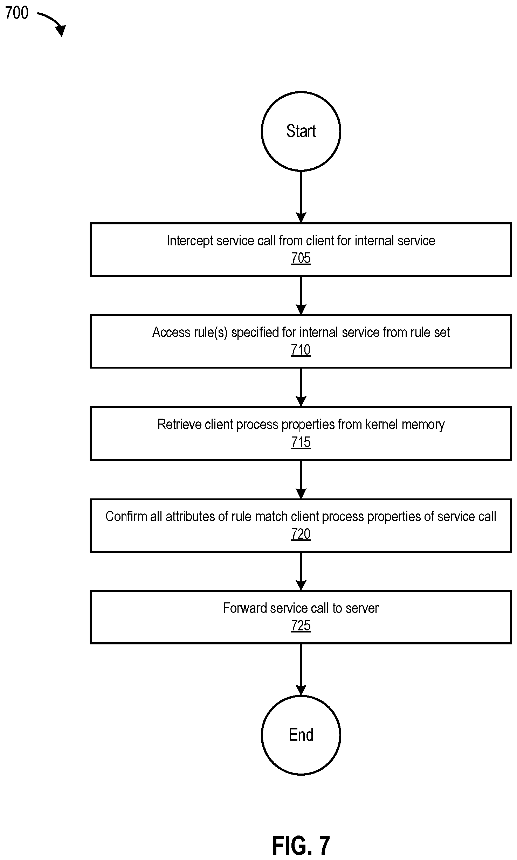

FIG. 7 is a flowchart that illustrates a process for securing internal services in an appliance, according to one embodiment. The process begins at 705 by intercepting a service call (e.g., a connect call, a service request, and/or a connection request) from a client (e.g., client 120) for an internal service (e.g., internal service 175(1)). At 710, the process retrieves (or accesses) one or more rules (e.g., rules 160(1) and 160(2)) from a rule set (e.g., rule set 155) specified and/or defined for the internal service. At 715, the process retrieves client process properties (e.g., client process property 145(1), 145(2), 145(3), and the like) from kernel memory (e.g., kernel memory 140). At 720, the process confirms that each attribute of each specified rule matches the corresponding client process property associated with the client process that initiates the service call. At 725, the process ends by forwarding the service call to the server.

### An Example Computing Environment

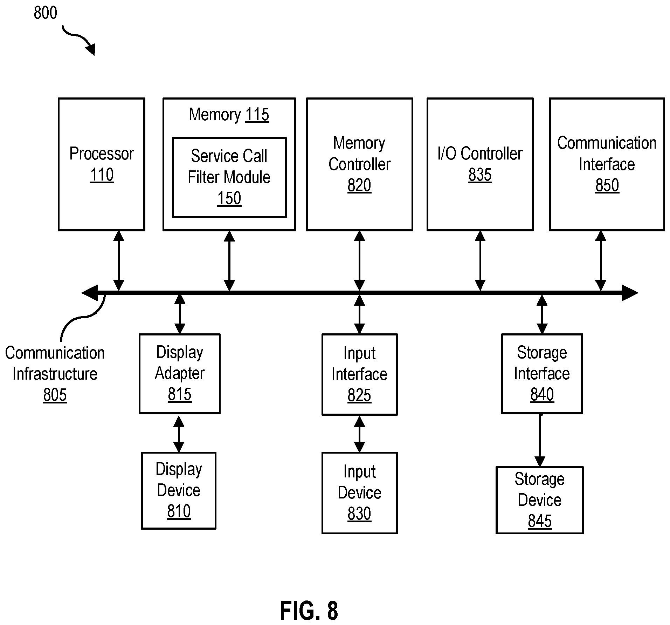

FIG. 8 is a block diagram of a computing system, illustrating how a service call filter module can be implemented in software, according to one embodiment. Computing system 800 represents any single or multi-processor computing device or system capable of executing computer-readable instructions. Computing system 800 can include, without limitation, one or more devices including workstations, personal computers, laptops, client-side terminals, servers, distributed computing systems, handheld devices, network appliances, storage controllers, and the like. Computing system 800 may include at least one processor 110 and a memory 115. By executing the software that implements appliance 105, computing system 800 becomes a computing device configured to secure internal services in an appliance.

Processor 110 generally represents any type or form of processing unit capable of processing data or interpreting and executing instructions. Processor 110 may receive instructions from a software application or module. These instructions may cause processor 110 to perform the functions of one or more of the embodiments described and/or illustrated herein. For example, processor 110 may perform and/or be a means for performing all or some of the operations, methods, or processes described and/or illustrated herein.

Memory 115 generally represents any type or form of volatile or non-volatile storage device or medium capable of storing data and/or other computer-readable instructions. Examples include, without limitation, random access memory (RAM), read only memory (ROM), flash memory, or any other suitable memory device. Although not required, in certain embodiments computing system 800 may include both a volatile memory unit and a non-volatile storage device. In one example, program instructions implementing a service call filter module 150 may be loaded into memory 115.

In certain embodiments, computing system 800 may also include one or more components or elements in addition to processor 110 and memory 115. For example, as illustrated in FIG. 8, computing system 800 may include a memory controller 820, an Input/Output (I/O) controller 835, and a communication interface 850, each of which may be interconnected via a communication infrastructure 805. Communication infrastructure 805 generally represents any type or form of infrastructure capable of facilitating communication between components of a computing device. Examples of communication infrastructure 805 include, without limitation, a communication bus (e.g., Industry Standard Architecture (ISA), Peripheral Component Interconnect (PCI), PCI express (PCIe), or similar bus) and a network.

Memory controller 820 generally represents any type or form of device capable of handling memory or data or controlling communication between one or more components of computing system 800. For example, in certain embodiments memory controller 820 may control communication between processor 855, memory 860, and I/O controller 835 via communication infrastructure 805. In certain embodiments, memory controller 820 may perform and/or be a means for performing, either alone or in combination with other elements, one or more of the operations or features described and/or illustrated herein.

I/O controller 835 generally represents any type or form of module capable of coordinating and/or controlling the input and output functions of a computing device. For example, I/O controller 835 may control or facilitate transfer of data between one or more elements of computing system 800, such as processor 855, memory 860, communication interface 850, display adapter 815, input interface 825, and storage interface 840.

Communication interface 850 represents any type or form of communication device or adapter capable of facilitating communication between computing system 800 and one or more additional devices. For example, communication interface 850 may facilitate communication between appliance 105 and a private or public network including additional computing systems. Examples of communication interface 850 include, without limitation, a wired network interface (such as a network interface card), a wireless network interface (such as a wireless network interface card), a modem, and any other suitable interface. Communication interface 850 may provide a direct connection to a remote server via a direct link to a network, such as the Internet. Communication interface 850 may also indirectly provide such a connection through, for example, a local area network (such as an Ethernet network), a personal area network, a telephone or cable network, a cellular telephone connection, a satellite data connection, or any other suitable connection.

In some embodiments, communication interface 850 may also represent a host adapter configured to facilitate communication between computing system 800 and one or more additional network or storage devices via an external bus or communications channel. Examples of host adapters include, without limitation, Small Computer System Interface (SCSI) host adapters, Universal Serial Bus (USB) host adapters, Institute of Electrical and Electronics Engineers (IEEE) 1394 host adapters, Serial Advanced Technology Attachment (SATA), Serial Attached SCSI (SAS), and external SATA (eSATA) host adapters, Advanced Technology Attachment (ATA) and Parallel ATA (PATA) host adapters, Fibre Channel interface adapters, Ethernet adapters, or the like. Communication interface 850 may also allow computing system 800 to engage in distributed or remote computing. Communication interface 850 may receive instructions from a remote device or send instructions to a remote device for execution.

Computing system 800 may also include at least one display device 810 coupled to communication infrastructure 805 via a display adapter 815. Display device 810 generally represents any type or form of device capable of visually displaying information forwarded by display adapter 815. Similarly, display adapter 815 generally represents any type or form of device configured to forward graphics, text, and other data from communication infrastructure 805 (or from a frame buffer, as known in the art) for display on display device 810.

Computing system 800 may also include at least one input device 830 coupled to communication infrastructure 805 via an input interface 825. Input device 830 generally represents any type or form of input device capable of providing input, either computer or human generated, to computing system 800. Examples of input device 830 include, without limitation, a keyboard, a pointing device, a speech recognition device, or any other input device.

Computing system 800 may also include storage device 845 coupled to communication infrastructure 805 via a storage interface 840. Storage device 845 generally represents any type or form of storage devices or mediums capable of storing data and/or other computer-readable instructions. Storage device 845 may include a magnetic disk drive (e.g., a so-called hard drive), a floppy disk drive, a magnetic tape drive, an optical disk drive, a flash drive, or the like. Storage interface 840 generally represents any type or form of interface or device for transferring and/or transmitting data between storage device 845, and other components of computing system 800. Storage device 845 may be configured to read from and/or write to a removable storage unit configured to store computer software, data, or other computer-readable information. Examples of removable storage units include, without limitation, a floppy disk, a magnetic tape, an optical disk, a flash memory device, or the like. Storage device 845 may also include other similar structures or devices for allowing computer software, data, or other computer-readable instructions to be loaded into computing system 800 (e.g., to read and write software, data, or computer-readable information). Storage device 845 may also be a part of computing system 800 or may be separate devices accessed through other interface systems.

Other devices or subsystems may be connected to computing system 800. All of the components and devices illustrated in FIG. 8 need not be present to practice the embodiments described and/or illustrated herein. The devices and subsystems referenced above may also be interconnected in different ways from that shown in FIG. 8. Computing system 800 may also employ any number of software, firmware, and/or hardware configurations. For example, embodiments disclosed herein may be encoded as a computer program (also referred to as computer software, software applications, computer-readable instructions, or computer control logic) on a computer-readable storage medium. Examples of computer-readable storage media include magnetic-storage media (e.g., hard disk drives and floppy disks), optical-storage media (e.g., CD- or DVD-ROMs), electronic-storage media (e.g., solid-state drives and flash media), and the like. Such computer programs can also be transferred to computing system 800 for storage in memory via a network such as the Internet or upon a carrier medium.

The computer-readable medium containing the computer program may be loaded into computing system 800. All or a portion of the computer program stored on the computer-readable medium may then be stored in memory 160 and/or various portions of storage device 845. When executed by processor 110, a computer program loaded into computing system 800 may cause processor 110 to perform and/or be a means for performing the functions of one or more of the embodiments described and/or illustrated herein. Alternatively, one or more of the embodiments described and/or illustrated herein may be implemented in firmware and/or hardware. Computing system 800 may be configured as an application specific integrated circuit (ASIC) adapted to implement one or more of the embodiments disclosed herein.

### An Example Networking Environment

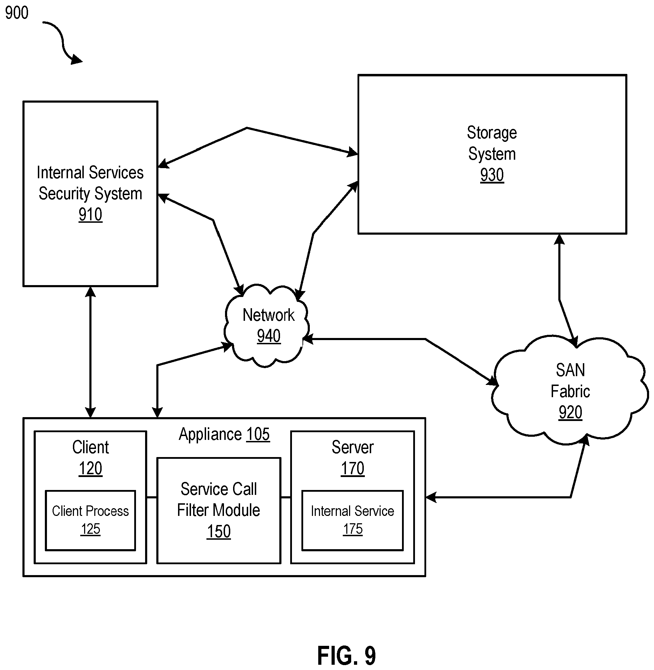

FIG. 9 is a block diagram of a networked system, illustrating how various computing devices can communicate via a network, according to one embodiment of the present disclosure. In certain embodiments, network-attached storage (NAS) devices may be configured to communicate with appliance 105 using various protocols, such as Network File System (NFS), Server Message Block (SMB), or Common Internet File System (CIFS).

Network 940 generally represents any type or form of computer network or architecture capable of facilitating communication between multiple computing devices. Network 940 may facilitate communication between appliance 105 and other systems. In certain embodiments, a communication interface, such as communication interface 850 in FIG. 8, may be used to provide connectivity between appliance 105 and network 940. It should be noted that the embodiments described and/or illustrated herein are not limited to the Internet or any particular network-based environment. For example, network 940 can be a Storage Area Network (SAN).

In at least one embodiment, all or a portion of one or more of the embodiments disclosed herein may be encoded as a computer program and loaded onto and executed by appliance 105. In addition, all or a portion of one or more of the embodiments disclosed herein may also be encoded as a computer program, stored on appliance 105, and distributed over network 940.

In some examples, all or a portion of the computing devices in FIGs. 1A, 1B, 1C, 1D, 2A, 2B, and 2C may represent portions of a cloud-computing or network-based environment. Cloud-computing environments may provide various services and applications via the Internet. These cloud-based services (e.g., software as a service, platform as a service, infrastructure as a service, etc.) may be accessible through a web browser or other remote interface. Various functions described herein may be provided through a remote desktop environment or any other cloud-based computing environment.

In addition, one or more of the components described herein may transform data, physical devices, and/or representations of physical devices from one form to another. For example, appliance 105 may transform behavior of a computing device, cluster, and/or server in order to cause the computing device, cluster, and/or server to secure internal service in one or more appliances.

Although the present disclosure has been described in connection with several embodiments, the disclosure is not intended to be limited to the specific forms set forth herein. On the contrary, it is intended to cover such alternatives, modifications, and equivalents as can be reasonably included within the scope of the disclosure as defined by the appended claims.

## Claims

1. A method comprising:
intercepting a service call (130; 210(1), 215, 220(1), 225(1), 230(1)) initiated by a client process (125) of a client (120) executing in a user space (205) of an appliance (105), wherein
the service call is intercepted by a service call filter module (150) executing in a kernel,
the service call is a request for an internal service of a plurality of internal services,
the internal service is provided by a server executing in another user space (206) of the appliance,
the service call comprises an identifier,
the identifier is one of a plurality of identifiers,
each identifier of the plurality of identifiers identifies a corresponding one of the plurality of services, and
the identifier identifies the internal service;
determining, by the service call filter module, whether one or more rules of a plurality of rules are specified for the internal service identified by the identifier, wherein
the service call filter module comprises a rule set,
the rule set is stored in a kernel memory (140) by virtue of being comprised in the service call filter module,
the rule set comprises the rules and the plurality of identifiers, and
the determining is performed by the service call filter module accessing the rule set using the identifier;
in response to a determination that the one or more rules are specified for the identifier,
retrieving one or more client process properties of a plurality of client process properties associated with the client process from a kernel memory (140),
processing one or more attributes of the one or more rules,
forwarding the service call to the server, if the processing indicates that the forwarding the service call is allowable, and
generating an error notification, if the processing indicates that the forwarding the service call is not allowable; and
in response to a determination that no rule is specified for the internal service identified by the identifier,
forwarding the service call to the server, wherein the forwarding the service call is performed without accessing the kernel memory.

2. The method of claim 1, wherein
the identifier is a port identifier or a port number.

3. The method of claim 1, wherein
the plurality of client process properties comprise at least one of a user context, a user group context, a client program name, a parent process name, or a terminal type.

4. The method of claim 2, wherein:
the forwarding the service call to the server is allowable if each attribute of the one or more attributes of at least one rule matches a corresponding client process property of the one or more client process properties.

5. The method of claim 1, wherein
a first attribute of the one or more attributes of a first rule of the one or more rules corresponds to a first client process property of the one or more client process properties, and
a second attribute of the one or more attributes of a second rule of the one or more rules corresponds to a second client process property of the one or more client process properties.

6. The method of claim 1, wherein
the plurality of rules are part of a rule set,
the rule set is part of a service call filter module, and
the service call filter module is part of kernel.

7. The method of claim 1, further comprising:
accessing a rule set to determine whether the internal service identified by the identifier is unprotected or

8. The method of claim 7, wherein
the internal service is protected if the rule set comprises at least one rule of the plurality of rules for the identifier specified in the service call, and
the internal service is unprotected if the rule set does not comprise at least one rule of the plurality of rules for the internal service specified in the service call.

9. A non-transitory computer readable storage medium storing program instructions executable to perform a method comprising:
intercepting a service call (130; 210(1), 215, 220(1), 225(1), 230(1)) initiated by a client process (125) of a client (120) executing in a user space (205) of an appliance (105), wherein
the service call is intercepted by a service call filter module (150) executing in a kernel,
the service call is a request for an internal service of a plurality of internal services,
the internal service is provided by a server executing in another user space (206) of the appliance,
the service call comprises an identifier,
the identifier is one of a plurality of identifiers,
each identifier of the plurality of identifiers identifies a corresponding one of the plurality of services, and
the identifier identifies the internal service;
determining, by the service call filter module, whether one or more rules of a plurality of rules are specified for the internal service identified by the identifier, wherein
the service call filter module comprises a rule set,
the rule set is stored in the kernel memory by virtue of being comprised in the service call filter module,
the rule set comprises the rules and the plurality of identifiers, and
the determining is performed by the service call filter module accessing the rule set using the identifier;
in response to a determination that the one or more rules are specified for the identifier,
retrieving one or more client process properties of a plurality of client process properties associated with the client process from a kernel memory (140),
processing one or more attributes of the one or more rules,
forwarding the service call to the server, if the processing indicates that the forwarding the service call is allowable, and
generating an error notification, if the processing indicates that the forwarding the service call is not allowable; and
in response to a determination that no rule is specified for the internal service identified by the identifier,
forwarding the service call to the server, wherein the forwarding the service call is performed without accessing the kernel memory.

10. The non-transitory computer readable storage medium of claim 9, wherein
the identifier is a port identifier or a port number, and
the plurality of client process properties comprise at least one of a user context, a user group context, a client program name, a parent process name, or a terminal type.

11. The non-transitory computer readable storage medium of claim 10, wherein:
the forwarding the service call to the server is allowable if each attribute of at least one rule matches a corresponding client process property.

12. A system comprising:
one or more processors; and
a memory coupled to the one or more processors, wherein the memory stores program instructions executable by the one or more processors to perform a method comprising:
intercepting a service call (130; 210(1), 215, 220(1), 225(1), 230(1)) initiated by a client process (125) of a client (120) executing in a user space (205) of an appliance (105), wherein
the service call is intercepted by a service call filter module (150) executing in a kernel,
the service call is a request for an internal service of a plurality of internal services,
the internal service is provided by a server executing in another user space (206) of the appliance,
the service call comprises an identifier,
the identifier is one of a plurality of identifiers,
each identifier of the plurality of identifiers identifies a corresponding one of the plurality of services, and
the identifier identifies the internal service;
determining, by the service call filter module, whether one or more rules of a plurality of rules are specified for the internal service identified by the identifier, wherein
the service call filter module comprises a rule set,
the rule set is stored in the kernel memory by virtue of being comprised in the service call filter module,
the rule set comprises the rules and the plurality of identifiers, and
the determining is performed by the service call filter module accessing the rule set using the identifier;
in response to a determination that the one or more rules are specified for the identifier,
retrieving one or more client process properties of a plurality of client process properties associated with the client process from a kernel memory (140),
processing one or more attributes of the one or more rules,
forwarding the service call to the server, if the processing indicates that the forwarding the service is allowable, and
generating an error notification, if the processing indicates that the forwarding the service call is not allowable; and
in response to a determination that no rule is specified for the internal service identified by the identifier,
forwarding the service call to the server, wherein the forwarding the service call is performed without accessing the kernel memory.

13. The system of claim 12,
wherein the plurality of client process properties comprise at least one of a user context, a user group context, a client program name, a parent process name, or a terminal type.

14. The system of claim 13, wherein:
the forwarding the service call to the server is allowable if each attribute of the one or more attributes of at least one rule matches a corresponding client process property of the one or more client process properties.

## Patentansprüche

1. Verfahren, umfassend:
Abfangen eines Dienstaufrufs (130; 210(1), 215, 220(1), 225(1), 230(1)), der durch einen Client-Prozess (125) eines Clients (120) initiiert wird, der in einem Benutzerraum (205) eines Geräts (105) ausgeführt wird, wobei
der Dienstaufruf durch ein Dienstaufruffiltermodul (150) abgefangen wird, das in einem Kernel ausgeführt wird,
der Dienstaufruf eine Anforderung für einen internen Dienst einer Vielzahl interner Dienste ist,
der interne Dienst durch einen Server bereitgestellt wird, der in einem anderen Benutzerraum (206) des Geräts ausgeführt wird,
der Dienstaufruf eine Kennung umfasst,
die Kennung eine einer Vielzahl von Kennungen ist,
jede Kennung der Vielzahl von Kennungen einen entsprechenden der Vielzahl von Diensten identifiziert, und
die Kennung den internen Dienst identifiziert;
Bestimmen, durch das Dienstaufruffiltermodul, ob eine oder mehrere Regeln einer Vielzahl von Regeln für den internen Dienst spezifiziert sind, der durch die Kennung identifiziert wird, wobei
das Dienstaufruffiltermodul einen Regelsatz umfasst,
der Regelsatz dadurch in einem Kernel-Speicher (140) gespeichert ist, dass er im Dienstaufruffiltermodul enthalten ist,
der Regelsatz die Regeln und die Vielzahl von Kennungen umfasst, und
das Bestimmen durch das Dienstaufruffiltermodul durchgeführt wird, das unter Verwendung der Kennung auf den Regelsatz zugreift;
als Reaktion auf eine Bestimmung, dass die eine oder die mehreren Regeln für die Kennung spezifiziert sind,
Abrufen einer oder mehrerer Client-Prozesseigenschaften einer Vielzahl von Client-Prozesseigenschaften, die mit dem Client-Prozess assoziiert sind, aus einem Kernel-Speicher (140),
Verarbeiten eines oder mehrerer Attribute der einen oder der mehreren Regeln,
Weiterleiten des Dienstaufrufs an den Server, falls die Verarbeitung angibt, dass das Weiterleiten des Dienstaufrufs zulässig ist, und
Erzeugen einer Fehlerbenachrichtigung, falls die Verarbeitung angibt, dass das Weiterleiten des Dienstaufrufs nicht zulässig ist; und
als Reaktion auf eine Bestimmung, dass keine Regel für den internen Dienst spezifiziert ist, der durch die Kennung identifiziert wird,
Weiterleiten des Dienstaufrufs an den Server, wobei das Weiterleiten des Dienstaufrufs ohne Zugriff auf den Kernel-Speicher durchgeführt wird.

2. Verfahren nach Anspruch 1, wobei
die Kennung eine Portkennung oder eine Portnummer ist.

3. Verfahren nach Anspruch 1, wobei
die Vielzahl von Client-Prozesseigenschaften mindestens eines von einem Benutzerkontext, einem Benutzergruppenkontext, einem Client-Programmnamen, einem Parent-Prozessnamen oder einem Endgerätetyp umfasst.

4. Verfahren nach Anspruch 2, wobei:
das Weiterleiten des Dienstaufrufs an den Server zulässig ist, falls jedes Attribut des einen oder der mehreren Attribute mindestens einer Regel mit einer entsprechenden Client-Prozesseigenschaft der einen oder der mehreren Client-Prozesseigenschaften übereinstimmt.

5. Verfahren nach Anspruch 1, wobei
ein erstes Attribut des einen oder der mehreren Attribute einer ersten Regel der einen oder der mehreren Regeln einer ersten Client-Prozesseigenschaft der einen oder der mehreren Client-Prozesseigenschaften entspricht, und
ein zweites Attribut des einen oder der mehreren Attribute einer zweiten Regel der einen oder der mehreren Regeln einer zweiten Client-Prozesseigenschaft der einen oder der mehreren Client-Prozesseigenschaften entspricht.

6. Verfahren nach Anspruch 1, wobei
die Vielzahl von Regeln Teil eines Regelsatzes ist,
der Regelsatz Teil eines Dienstaufruffiltermoduls ist, und
das Dienstaufruffiltermodul Teil eines Kernels ist.

7. Verfahren nach Anspruch 1, ferner umfassend:
Zugreifen auf einen Regelsatz, um zu bestimmen, ob der durch die Kennung identifizierte interne Dienst ungeschützt ist oder

8. Verfahren nach Anspruch 7, wobei
der interne Dienst geschützt ist, falls der Regelsatz mindestens eine Regel der Vielzahl von Regeln für die im Dienstaufruf spezifizierte Kennung umfasst, und
der interne Dienst ungeschützt ist, falls der Regelsatz nicht mindestens eine Regel der Vielzahl von Regeln für den im Dienstaufruf spezifizierten internen Dienst umfasst.

9. Nichtflüchtiges computerlesbares Speichermedium, das Programmanweisungen speichert, die zum Durchführen eines Verfahrens ausführbar sind, das umfasst:
Abfangen eines Dienstaufrufs (130; 210(1), 215, 220(1), 225(1), 230(1)), der durch einen Client-Prozess (125) eines Clients (120) initiiert wird, der in einem Benutzerraum (205) eines Geräts (105) ausgeführt wird, wobei
der Dienstaufruf durch ein Dienstaufruffiltermodul (150) abgefangen wird, das in einem Kernel ausgeführt wird,
der Dienstaufruf eine Anforderung für einen internen Dienst einer Vielzahl interner Dienste ist,
der interne Dienst durch einen Server bereitgestellt wird, der in einem anderen Benutzerraum (206) des Geräts ausgeführt wird,
der Dienstaufruf eine Kennung umfasst,
die Kennung eine einer Vielzahl von Kennungen ist,
jede Kennung der Vielzahl von Kennungen einen entsprechenden der Vielzahl von Diensten identifiziert, und
die Kennung den internen Dienst identifiziert;
Bestimmen, durch das Dienstaufruffiltermodul, ob eine oder mehrere Regeln einer Vielzahl von Regeln für den internen Dienst spezifiziert sind, der durch die Kennung identifiziert wird, wobei
das Dienstaufruffiltermodul einen Regelsatz umfasst,
der Regelsatz dadurch in dem Kernel-Speicher gespeichert ist, dass er im Dienstaufruffiltermodul enthalten ist,
der Regelsatz die Regeln und die Vielzahl von Kennungen umfasst, und
das Bestimmen durch das Dienstaufruffiltermodul durchgeführt wird, das unter Verwendung der Kennung auf den Regelsatz zugreift;
als Reaktion auf eine Bestimmung, dass die eine oder die mehreren Regeln für die Kennung spezifiziert sind,
Abrufen einer oder mehrerer Client-Prozesseigenschaften einer Vielzahl von Client-Prozesseigenschaften, die mit dem Client-Prozess assoziiert sind, aus einem Kernel-Speicher (140),
Verarbeiten eines oder mehrerer Attribute der einen oder der mehreren Regeln,
Weiterleiten des Dienstaufrufs an den Server, falls die Verarbeitung angibt, dass das Weiterleiten des Dienstaufrufs zulässig ist, und
Erzeugen einer Fehlerbenachrichtigung, falls die Verarbeitung angibt, dass das Weiterleiten des Dienstaufrufs nicht zulässig ist; und
als Reaktion auf eine Bestimmung, dass keine Regel für den internen Dienst spezifiziert ist, der durch die Kennung identifiziert wird,
Weiterleiten des Dienstaufrufs an den Server, wobei das Weiterleiten des Dienstaufrufs ohne Zugriff auf den Kernel-Speicher durchgeführt wird.

10. Nichtflüchtiges computerlesbares Speichermedium nach Anspruch 9, wobei
die Kennung eine Portkennung oder eine Portnummer ist, und
die Vielzahl von Client-Prozesseigenschaften mindestens eines von einem Benutzerkontext, einem Benutzergruppenkontext, einem Client-Programmnamen, einem Parent-Prozessnamen oder einem Endgerätetyp umfasst.

11. Nichtflüchtiges computerlesbares Speichermedium nach Anspruch 10, wobei:
das Weiterleiten des Dienstaufrufs an den Server zulässig ist, falls jedes Attribut mindestens einer Regel mit einer entsprechenden Client-Prozesseigenschaft übereinstimmt.

12. System, umfassend:
einen oder mehrere Prozessoren; und
einen Speicher, der mit dem einen oder den mehreren Prozessoren gekoppelt ist, wobei der Speicher Programmanweisungen speichert, die durch den einen oder die mehreren Prozessoren ausgeführt werden können, um ein Verfahren durchzuführen, das umfasst:
Abfangen eines Dienstaufrufs (130; 210(1), 215, 220(1), 225(1), 230(1)), der durch einen Client-Prozess (125) eines Clients (120) initiiert wird, der in einem Benutzerraum (205) eines Geräts (105) ausgeführt wird, wobei
der Dienstaufruf durch ein Dienstaufruffiltermodul (150) abgefangen wird, das in einem Kernel ausgeführt wird,
der Dienstaufruf eine Anforderung für einen internen Dienst einer Vielzahl interner Dienste ist,
der interne Dienst durch einen Server bereitgestellt wird, der in einem anderen Benutzerraum (206) des Geräts ausgeführt wird,
der Dienstaufruf eine Kennung umfasst,
die Kennung eine einer Vielzahl von Kennungen ist,
jede Kennung der Vielzahl von Kennungen einen entsprechenden der Vielzahl von Diensten identifiziert, und
die Kennung den internen Dienst identifiziert;
Bestimmen, durch das Dienstaufruffiltermodul, ob eine oder mehrere Regeln einer Vielzahl von Regeln für den internen Dienst spezifiziert sind, der durch die Kennung identifiziert wird, wobei
das Dienstaufruffiltermodul einen Regelsatz umfasst,
der Regelsatz dadurch in dem Kernel-Speicher gespeichert ist, dass er im Dienstaufruffiltermodul enthalten ist,
der Regelsatz die Regeln und die Vielzahl von Kennungen umfasst, und
das Bestimmen durch das Dienstaufruffiltermodul durchgeführt wird, das unter Verwendung der Kennung auf den Regelsatz zugreift;
als Reaktion auf eine Bestimmung, dass die eine oder die mehreren Regeln für die Kennung spezifiziert sind,
Abrufen einer oder mehrerer Client-Prozesseigenschaften einer Vielzahl von Client-Prozesseigenschaften, die mit dem Client-Prozess assoziiert sind, aus einem Kernel-Speicher (140),
Verarbeiten eines oder mehrerer Attribute der einen oder der mehreren Regeln,
Weiterleiten des Dienstaufrufs an den Server, falls die Verarbeitung angibt, dass das Weiterleiten des Dienstes zulässig ist, und
Erzeugen einer Fehlerbenachrichtigung, falls die Verarbeitung angibt, dass das Weiterleiten des Dienstaufrufs nicht zulässig ist; und
als Reaktion auf eine Bestimmung, dass keine Regel für den internen Dienst spezifiziert ist, der durch die Kennung identifiziert wird,
Weiterleiten des Dienstaufrufs an den Server, wobei das Weiterleiten des Dienstaufrufs ohne Zugriff auf den Kernel-Speicher durchgeführt wird.

13. System nach Anspruch 12,
wobei die Vielzahl von Client-Prozesseigenschaften mindestens eines von einem Benutzerkontext, einem Benutzergruppenkontext, einem Client-Programmnamen, einem Parent-Prozessnamen oder einem Endgerätetyp umfasst.

14. System nach Anspruch 13, wobei:
das Weiterleiten des Dienstaufrufs an den Server zulässig ist, falls jedes Attribut des einen oder der mehreren Attribute mindestens einer Regel mit einer entsprechenden Client-Prozesseigenschaft der einen oder der mehreren Client-Prozesseigenschaften übereinstimmt.

## Revendications

1. Procédé, comprenant :
l'interception d'un appel de service (130 ; 210(1), 215, 220(1), 225(1), 230(1)) lancé par un processus client (125) d'un client (120) s'exécutant dans un espace utilisateur (205) d'un appareil (105),
l'appel de service étant intercepté par un module de filtrage d'appel de service (150) s'exécutant dans un noyau,
l'appel de service étant une demande d'un service interne d'une pluralité de services internes,
le service interne étant fourni par un serveur s'exécutant dans un autre espace utilisateur (206) de l'appareil,
l'appel de service comprenant un identifiant,
l'identifiant étant l'un d'une pluralité d'identifiants,
chaque identifiant de la pluralité d'identifiants identifiant un service correspondant de la pluralité de services, et
l'identifiant identifiant le service interne ;
la détermination, par le module de filtrage d'appel de service, si une ou plusieurs règles d'une pluralité de règles sont ou non stipulées pour le service interne identifié par l'identifiant,
le module de filtrage d'appel de service comprenant un jeu de règles,
le jeu de règles étant stocké dans une mémoire (140) de noyau par le fait d'être contenu dans le module de filtrage d'appel de service,
le jeu de règles comprenant les règles et la pluralité d'identifiants, et
la détermination étant réalisée par accès, par le module de filtrage d'appel de service, au jeu de règles à l'aide de l'identifiant ;
en réponse à une détermination que les une ou plusieurs règles sont stipulées pour l'identifiant,
la récupération, dans une mémoire (140) de noyau, d'une ou de plusieurs propriétés de processus client d'une pluralité de propriétés de processus client associées au processus client,
le traitement d'un ou de plusieurs attributs des une ou plusieurs règles,
le transfert de l'appel de service au serveur, si le traitement indique que le transfert de l'appel de service est admis, et
la génération d'une notification d'erreur, si le traitement indique que le transfert de l'appel de service n'est pas admis ; et
en réponse à une détermination qu'aucune règle n'est stipulée pour le service interne identifié par l'identifiant,
le transfert de l'appel de service au serveur, le transfert de l'appel de service étant réalisé sans accès à la mémoire de noyau.

2. Procédé selon la revendication 1,
l'identifiant étant un identifiant de port ou un numéro de port.

3. Procédé selon la revendication 1,
la pluralité de propriétés de processus client comprenant un contexte d'utilisateur et/ou un contexte de groupe d'utilisateurs et/ou un nom de programme client et/ou un nom de processus parent et/ou un type de terminal.

4. Procédé selon la revendication 2,
le transfert de l'appel de service au serveur étant admis si chaque attribut des un ou plusieurs attributs d'au moins une règle répond à une propriété de processus client correspondante des une ou plusieurs propriétés de processus client.

5. Procédé selon la revendication 1,
un premier attribut des un ou plusieurs attributs d'une première règle des une ou plusieurs règles correspondant à une première propriété de processus client des une ou plusieurs propriétés de processus client, et
un deuxième attribut des un ou plusieurs attributs d'une deuxième règle des une ou plusieurs règles correspondant à une deuxième propriété de processus client des une ou plusieurs propriétés de processus client.

6. Procédé selon la revendication 1,
la pluralité de règles faisant partie d'un jeu de règles, le jeu de règles faisant partie d'un module de filtrage d'appel de service, et
le module de filtrage d'appel de service faisant partie d'un noyau.

7. Procédé selon la revendication 1, comprenant en outre :
l'accès à un jeu de règles dans le but de déterminer si le service interne identifié par l'identifiant est non protégé ou

8. Procédé selon la revendication 7,
le service interne étant protégé si le jeu de règles comprend au moins une règle de la pluralité de règles pour l'identifiant stipulé dans l'appel de service, et
le service interne étant non protégé si le jeu de règles ne comprend pas au moins une règle de la pluralité de règles pour le service interne stipulé dans l'appel de service.

9. Support de stockage non transitoire lisible par ordinateur stockant des instructions de programme exécutables pour réaliser un procédé comprenant :
l'interception d'un appel de service (130 ; 210(1), 215, 220(1), 225(1), 230(1)) lancé par un processus client (125) d'un client (120) s'exécutant dans un espace utilisateur (205) d'un appareil (105),
l'appel de service étant intercepté par un module de filtrage d'appel de service (150) s'exécutant dans un noyau,
l'appel de service étant une demande d'un service interne d'une pluralité de services internes,
le service interne étant fourni par un serveur s'exécutant dans un autre espace utilisateur (206) de l'appareil,
l'appel de service comprenant un identifiant,
l'identifiant étant l'un d'une pluralité d'identifiants,
chaque identifiant de la pluralité d'identifiants identifiant un service correspondant de la pluralité de services, et
l'identifiant identifiant le service interne ;
la détermination, par le module de filtrage d'appel de service, si une ou plusieurs règles d'une pluralité de règles sont ou non stipulées pour le service interne identifié par l'identifiant,
le module de filtrage d'appel de service comprenant un jeu de règles,
le jeu de règles étant stocké dans la mémoire de noyau par le fait d'être contenu dans le module de filtrage d'appel de service,
le jeu de règles comprenant les règles et la pluralité d'identifiants, et
la détermination étant réalisée par accès, par le module de filtrage d'appel de service, au jeu de règles à l'aide de l'identifiant ;
en réponse à une détermination que les une ou plusieurs règles sont stipulées pour l'identifiant,
la récupération, dans une mémoire (140) de noyau, d'une ou de plusieurs propriétés de processus client d'une pluralité de propriétés de processus client associées au processus client,
le traitement d'un ou de plusieurs attributs des une ou plusieurs règles,
le transfert de l'appel de service au serveur, si le traitement indique que le transfert de l'appel de service est admis, et
la génération d'une notification d'erreur, si le traitement indique que le transfert de l'appel de service n'est pas admis ; et
en réponse à une détermination qu'aucune règle n'est stipulée pour le service interne identifié par l'identifiant,
le transfert de l'appel de service au serveur, le transfert de l'appel de service étant réalisé sans accès à la mémoire de noyau.

10. Support de stockage non transitoire lisible par ordinateur selon la revendication 9,
l'identifiant étant un identifiant de port ou un numéro de port, et
la pluralité de propriétés de processus client comprenant un contexte d'utilisateur et/ou un contexte de groupe d'utilisateurs et/ou un nom de programme client et/ou un nom de processus parent et/ou un type de terminal.

11. Support de stockage non transitoire lisible par ordinateur selon la revendication 10,
le transfert de l'appel de service au serveur étant admis si chaque attribut d'au moins une règle répond à une propriété de processus client correspondante.

12. Système, comprenant :
un ou plusieurs processeurs ; et
une mémoire couplée aux un ou plusieurs processeurs, la mémoire stockant des instructions de programme exécutables par les un ou plusieurs processeurs pour réaliser un procédé comprenant :
l'interception d'un appel de service (130 ; 210(1), 215, 220(1), 225(1), 230(1)) lancé par un processus client (125) d'un client (120) s'exécutant dans un espace utilisateur (205) d'un appareil (105),
l'appel de service étant intercepté par un module de filtrage d'appel de service (150) s'exécutant dans un noyau,
l'appel de service étant une demande d'un service interne d'une pluralité de services internes,
le service interne étant fourni par un serveur s'exécutant dans un autre espace utilisateur (206) de l'appareil,
l'appel de service comprenant un identifiant,
l'identifiant étant l'un d'une pluralité d'identifiants,
chaque identifiant de la pluralité d'identifiants identifiant un service correspondant de la pluralité de services, et
l'identifiant identifiant le service interne ;
la détermination, par le module de filtrage d'appel de service, si une ou plusieurs règles d'une pluralité de règles sont ou non stipulées pour le service interne identifié par l'identifiant,
le module de filtrage d'appel de service comprenant un jeu de règles,
le jeu de règles étant stocké dans la mémoire de noyau par le fait d'être contenu dans le module de filtrage d'appel de service,
le jeu de règles comprenant les règles et la pluralité d'identifiants, et
la détermination étant réalisée par accès, par le module de filtrage d'appel de service, au jeu de règles à l'aide de l'identifiant ;
en réponse à une détermination que les une ou plusieurs règles sont stipulées pour l'identifiant,
la récupération, dans une mémoire (140) de noyau, d'une ou de plusieurs propriétés de processus client d'une pluralité de propriétés de processus client associées au processus client,
le traitement d'un ou de plusieurs attributs des une ou plusieurs règles,
le transfert de l'appel de service au serveur, si le traitement indique que le transfert du service est admis, et
la génération d'une notification d'erreur, si le traitement indique que le transfert de l'appel de service n'est pas admis ; et
en réponse à une détermination qu'aucune règle n'est stipulée pour le service interne identifié par l'identifiant,
le transfert de l'appel de service au serveur, le transfert de l'appel de service étant réalisé sans accès à la mémoire de noyau.

13. Système selon la revendication 12,
la pluralité de propriétés de processus client comprenant un contexte d'utilisateur et/ou un contexte de groupe d'utilisateurs et/ou un nom de programme client et/ou un nom de processus parent et/ou un type de terminal.

14. Système selon la revendication 13,
le transfert de l'appel de service au serveur étant admis si chaque attribut des un ou plusieurs attributs d'au moins une règle répond à une propriété de processus client correspondante des une ou plusieurs propriétés de processus client.
